# EUROPEAN PATENT APPLICATION

(11) **EP 1 324 208 A1**
(43) Date of publication of application: **02.07.2003**
(21) Application number: 02017010.6
(22) Date of filing: 27.07.2002
(51) Int. Cl.: G06F 13/40, H04L 25/02

(54) **Circuit device for transmitting bus signals**

(30) Priority: 26.12.2001 JP 2001395037
(71) Applicant: Semiconductor Technology Academic Research Center, Yokohama-shi, Kanagawa 222-0033 (JP)
(72) Inventor: Ishibashi, Koichiro, Warabi, Saitama (JP); Yamashita, Takahiro, Funabashi, Chiba (JP); Arima, Yukio, 908, Yokohama-minamigarden, Yokohama, Kanagawa (JP)
(74) Representative: Grosse, Rainer, Dipl.-Ing.

(57) **Abstract**

A circuit device comprising a bus including a plurality of wires (13₁ - 13ₙ), and a plurality of driving circuits (12₁ - 12ₙ) which output input data to the wires in synchronism with a reference signal, each of the driving circuits being configured to have a first delay time of an output signal from the reference signal when a logic value of an input signal transits from "0" to "1" and a second delay time of the output signal from the reference signal when the logic value of the input signal transits from "1" to "0", the first and second delay times being different from each other.

## Description

The present invention relates to a circuit device, and more particularly to reduction of power consumption of wires in a CMOSLSI having a bus driving circuit.

Since microfabrication technique of the CMOS process has been developed year by year, a large-scale and high-speed integrated circuit (VLSI) can be implemented. Conventionally, there was a demand for a compact and high-performance VLSI; however, at present, reduction of power consumption of a VLSI has grown in importance.

As integrated circuits will be finer and finer, the process parameter will be proportionally reduced. Under these circumstances, the power consumption in the global wiring portion of an integrated circuit is greater than that in the rest, i.e., the logic circuit portion. Since a bus is formed of global wirings in an integrated circuit, it is obvious that the ratio of the power consumption by the bus will further increase. Therefore, to reduce the power consumption in the VLSI, it is important to reduce the power consumption by the bus.

A bus is formed of a number of wires of, for example, 32 bits or 64 bits, arranged close to each other in parallel. It is generally used for long-distance wiring. In the microfabrication process in recent years, the capacitance between wires is a few ten times that between a wire and the ground. Thus, the capacitance between wires is dominant.

Assume that signals in two adjacent wires simultaneously transit in the opposite directions: that is, the logical values of the two signals are simultaneously changed from "0" to "1" and "1" to "0", respectively. In this case, since the potential across the wires is inverted, the capacitance appears to double. The apparent increase in capacitance increases not only the signal delay time but also the power consumption.

A prior art document A (A bus delay reduction technique considering crosstalk (Kyushu Univ.), Design Automation and Test in Europe (DATE) 2000) proposes an arrangement in which a bus driver configured to intentionally delay bus clock timing by a delay inverter is provided for every other wire. With this arrangement, since the timings of the bus drivers differ in every other wire, signals in the adjacent wires do not simultaneously transit in the opposite directions. However, according to this method, it is necessary to specify wires beforehand at the design stage, so that the circuit can be designed appropriately in consideration of the order of wires. Therefore, the burden of design is increased.

A prior art document B (Jpn. Pat. Appln. KOKAI Publication No. 11-7349) proposes bus data transfer between ICs, in which data signals transmitted through the wires are slightly delayed from one another in one clock cycle, thereby preventing crosstalk. However, according to this method, since the respective signals are delayed in one clock cycle, the overhead of the delay time is increased. Therefore, it is difficult to apply this method in a case where a bus has a large number of wires (the data width is large) or the clock cycle is short.

In both methods described above, the transition time lag is generated regardless of whether the potentials of the adjacent wires transit in the opposite directions or the same direction. Therefore, the power consumption is reduced in the case of transition in the opposite directions, but increased in the case of transition in the same direction.

As described above, there is a demand for reduction in power consumption by a bus of an integrated circuit, particularly when the signals of the adjacent wires transit in the opposite directions. However, the conventional methods have the following problems: the burden in the design stage is increased; it is difficult to apply the method to the case where the bus has many wires; and the power consumption is increased when the potentials of wires transit in the same direction.

An object of the present invention is to solve the above problems of the conventional art and to provide a circuit device which can reduce the power consumption by a bus easily and reliably.

According to an aspect of the present invention, there is provided a circuit device comprising: a bus including a plurality of wires; and a plurality of driving circuits which output input data to the wires in synchronism with a reference signal, each of the driving circuits being configured to have a first delay time of an output signal from the reference signal when a logic value of an input signal transits from "0" to "1" and a second delay time of the output signal from the reference signal when the logic value of the input signal transits from "1" to "0", the first and second delay times being different from each other.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a diagram showing an example of the configuration of a circuit device according to an embodiment of the present invention;
FIG. 2 is a diagram showing an example of the relationship between an input data signal and an output data signal in a driving circuit shown in FIG. 1;
FIG. 3 is a diagram showing an example of the configuration of a buffer constituting the driving circuit shown in FIG. 1;
FIG. 4 is a diagram showing another example of the configuration of the buffer constituting the driving circuit shown in FIG. 1;
FIG. 5 is a diagram showing still another example of the configuration of the buffer constituting the driving circuit shown in FIG. 1;
FIG. 6 is a diagram showing still another example of the configuration of the buffer constituting the driving circuit shown in FIG. 1;
FIGS. 7A to 7C are diagrams showing examples of the configuration of a current limiting circuit shown in FIG. 6;
FIGS. 8A to 8C are diagrams showing examples of the configuration of another current limiting circuit shown in FIG. 6;
FIG. 9 is a diagram showing effects of reduction in power consumption attained by the embodiment of the present invention;
FIG. 10 is a diagram showing an example of the configuration of the driving circuit shown in FIG. 1;
FIG. 11 is a diagram for explaining a modification of the driving circuit shown in FIG. 10; and
FIG. 12 is a diagram for explaining another modification of the driving circuit shown in FIG. 10.

An embodiment of the present invention will now be described with reference to the drawings.

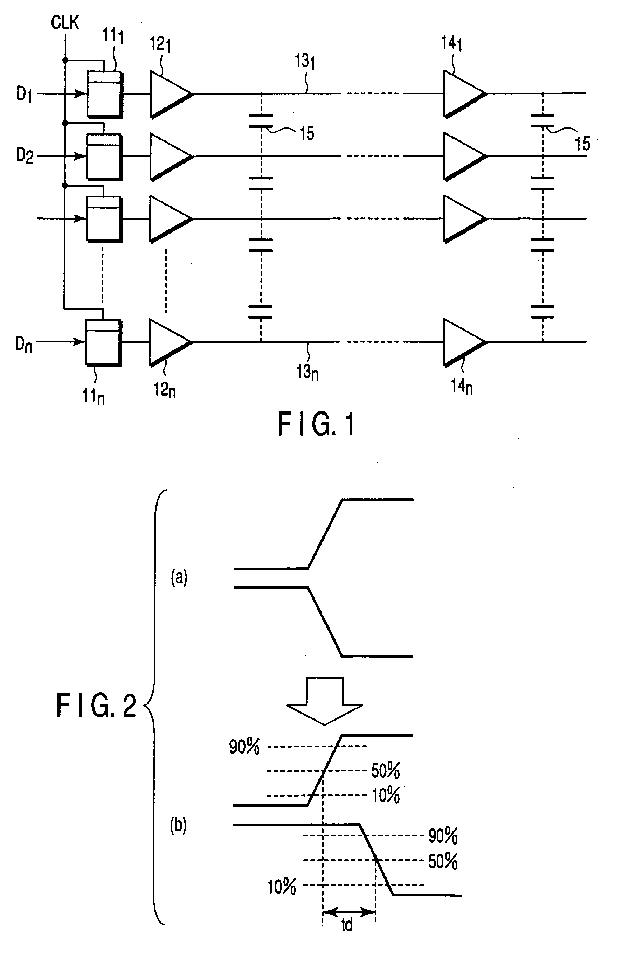

FIG. 1 shows a configuration of an embodiment of the present invention.

Data signals D₁ to Dₙ are input to an n-number of latch circuits 11₁ to 11ₙ. The data signals D₁ to Dₙ are latched by a common clock signal CLK. Outputs of the latch circuits 11₁ to 11ₙ are respectively connected to driving circuits (bus drivers) 12₁ to 12ₙ, which output data to a bus including wires 13₁ to 13ₙ. The wires 13₁ to 13ₙ are arranged in parallel and close to each other. Parasitic capacitance 15 exists between each pair of adjacent wires. If necessary, driving circuits (bus repeaters) 14₁ to 14ₙ may be provided in middle portions of the wires 13₁ to 13ₙ.

Each of the driving circuits 12₁ to 12ₙ and 14₁ to 14ₙ includes a buffer. The buffer is configured to output signals at different timings depending on whether the logical value of an input data signal falls from a high level (H) to a low level (L) or rises from the low level (L) to the high level (H). The buffer may be of either the type which outputs an inverted logical value of the input data signal or the type which outputs the logical value of the input data signal as it is.

FIG. 2 shows an example of the relationship between an input data signal (a) and an output data signal (b) of a buffer constituting the driving circuit 12₁ to 12ₙ. In this example, the output timing of an input data signal fall lags behind that of an input data signal rise for a time difference t_{d}.
Alternatively, the output timing of an input data signal rise may lag behind that of an input signal fall for a time difference t_{d}. The time difference t_{d} is preferably longer than the transition time of the logic state (the time required for the logical value to transit from the high level to the low level or from the low level to the high level). In this description, the transition time of the logic state means a time in which the voltage varies from 10% to 90% or from 90% to 10% of the voltage amplitude (the difference between the high level voltage and the low level voltage), as shown in the chart (b) of FIG. 2.

According to the above structure, as described above, the timing of outputting a data signal differs depending on the direction of transition of the logic state of an input data signal. Therefore, it is possible to reduce the period in which the directions of the potentials of adjacent wires are opposite, that is, the capacitance between the adjacent wires (parasitic capacitance) appears increased.
Consequently, the power consumption can be reduced. In particular, the period in which the directions of the potentials of adjacent wires are opposite can be substantially zero, if the time difference t_{d} is longer than the transition time of the logic state. Thus, the effect described above is reinforced. In addition, the signal delay time can be suppressed to a minimum by optimizing the time difference t_{d}, so that high-speed operation can be maintained.

Further, in the above structure, the output timing is automatically delayed in accordance with the transition direction of the logic state. Therefore, unlike in the conventional art, since it is unnecessary to consider the order of wires beforehand in the design stage, the burden of design can be reduced.
Furthermore, since the data signals are not sequentially delayed unlike in the conventional device, the present invention can be easily applied to the case where a bus has many wires.

Moreover, in the above structure, the time difference occurs only when the directions of transition of the logic states of the adjacent wires are opposite, whereas no time difference occurs in the case of the transition in the same direction.
According to the conventional method, the transition time lag is generated in both transition in the opposite directions and transition in the same direction. Therefore, the power consumption may increase in transition in the same direction. According to the structure described above, this problem can be eliminated.

Furthermore, in this embodiment, the power consumption can be reduced in terms of the circuit configuration. More specifically, in the conventional integrated circuit, to obtain a signal pattern which is not influenced by a capacitance between wires, it is necessary to add an extra logic circuit or shorten the data transmission cycle. According to the above embodiment, the power consumption can be reduced without using such a structure.

Examples of the buffer constituting each of the driving circuits 12₁ to 12ₙ and 14₁ to 14ₙ will be described.

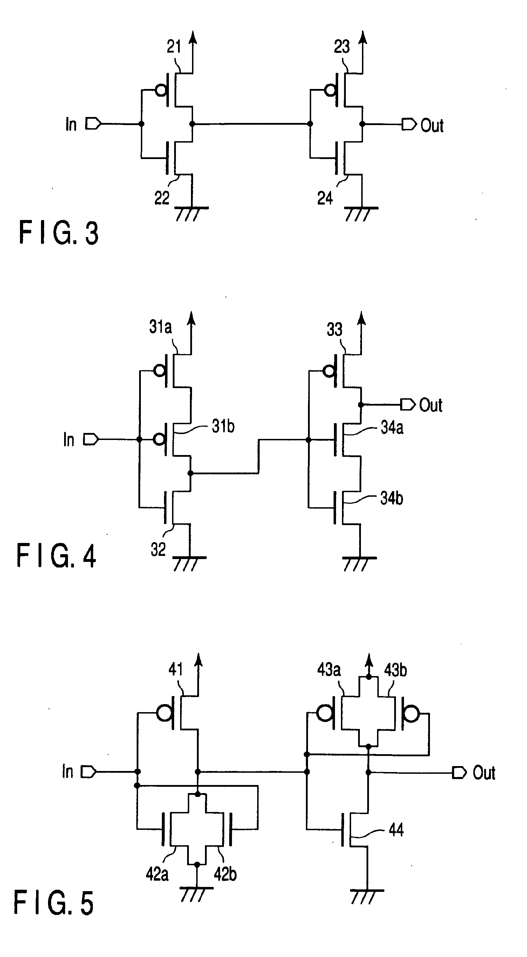

The buffers shown in FIGS. 3 to 6 are all formed of a circuit connected to a positive power source (pull-up side) and a circuit connected to a negative power source (pull-down side, i.e., the ground). The circuits on the positive and negative power source sides have different driving capacities, so that the time difference occurs between the output timings. All the buffers shown in FIGS. 3 to 6 have a complementary MIS (complementary MOS) structure as a basic configuration.

In the circuit example shown in FIG. 3, P-type MOS transistors 21 and 23 respectively constitute positive power source side circuits in first and second stages, and N-type MOS transistors 22 and 24 respectively constitute negative power source side circuits in the first and second stages. In the first stage, the driving capacity of the N-type MOS transistor 22 is greater than that of the P-type MOS transistor 21. In the second stage, the driving capacity of the P-type MOS transistor 23 is greater than that of the N-type MOS transistor 24.

To obtain the above structure, for example, the ratio of the gate width to the gate length of the P-type MOS transistor is set different from that of the N-type MOS transistor in both the first and second stages. More specifically, in the first stage, the gate width of the N-type MOS transistor 22 is set greater than that of the P-type MOS transistor 21, or the gate length of the N-type MOS transistor 22 is set smaller than that of the P-type MOS transistor 21. In the second stage, the gate width of the P-type MOS transistor 23 is set greater than that of the N-type MOS transistor 24, or the gate length of the P-type MOS transistor 23 is set smaller than that of the n-type MOS transistor 24.

In the circuit example shown in FIG. 4, P-type MOS transistors 31a and 31b constitute a positive power source side circuit, and an N-type MOS transistor 32 constitutes a negative power source side circuit in a first stage. A P-type MOS transistor 33 constitutes a positive power source side circuit and N-type MOS transistors 34a and 34b constitute a negative power source side circuit in a second stage. In the first stage, the driving capacity of the negative power source side circuit is greater than that of the positive power source side circuit. In the second stage, the driving capacity of the positive power source side circuit is greater than that of the negative power source side circuit.

In the circuit example shown in FIG. 5, a P-type MOS transistor 41 constitutes a positive power source side circuit, and N-type MOS transistors 42a and 42b constitute a negative power source side circuit in a first stage. P-type MOS transistors 43a and 43b constitute a positive power source side circuit, and an N-type MOS transistor 44 constitutes a negative power source side circuit in a second stage. In the first stage, the driving capacity of the negative power source side circuit is greater than that of the positive power source side circuit. In the second stage, the driving capacity of the positive power source side circuit is greater than that of the negative power source side circuit.

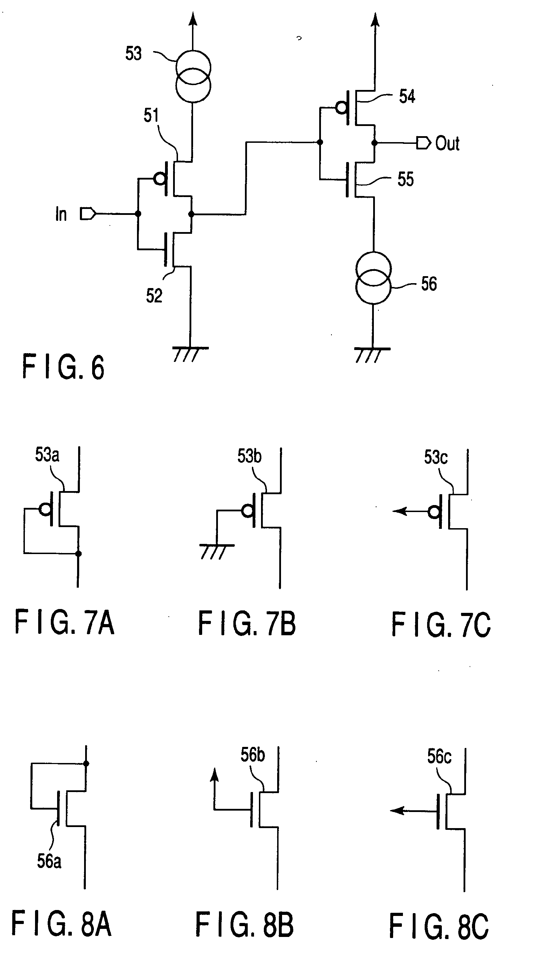

In the circuit example shown in FIG. 6, a P-type MOS transistor 51 and a current limiting circuit 53 constitute a positive power source side circuit, and an N-type MOS transistor 52 constitutes a negative power source side circuit in a first stage. A P-type MOS transistor 54 constitutes a positive power source side circuit, and an N-type MOS transistor 55 and a current limiting circuit 56 constitute a negative power source side circuit in a second stage. In the first stage, the driving capacity of the negative power source side circuit is greater than that of the positive power source side circuit. In the second stage, the driving capacity of the positive power source side circuit is greater than that of the negative power source side circuit.

FIGS. 7A, 7B and 7C show examples of the current limiting circuit 53 shown in FIG. 6. In the example shown in FIG. 7A, the gate and the drain of a P-type MOS transistor 53a are connected in common. In the example shown in FIG. 7B, the gate of a P-type MOS transistor 53b is grounded. In the example shown in FIG. 7C, a predetermined potential is applied to the gate of a P-type MOS transistor 53c.

FIGS. 8A, 8B and 8C show examples of the current limiting circuit 56 shown in FIG. 6. In the example shown in FIG. 8A, the gate and the drain of an N-type MOS transistor 56a are connected in common. In the example shown in FIG. 8B, the gate of an N-type MOS transistor 56b is connected to a positive power source. In the example shown in FIG. 8C, a predetermined potential is applied to the gate of an N-type MOS transistor 56c.

The circuits constituting the buffers shown in FIGS. 3 to 6 may be formed of more stages. The circuit configurations shown in FIGS. 3 to 6 may be combined as needed, such that the driving capacities of the positive and negative power source side circuits are different from each other.

In all the examples shown in FIGS. 3 to 6, the driving capacity of the negative power source side circuit is greater than that of the positive power source side circuit in the first stage, while the driving capacity of the positive power source side circuit is greater than that of the negative power source side circuit in the second stage, so that the output timing in the case of a signal fall lags behind that in the case of a signal rise. Instead, the driving capacity of the positive power source side circuit is greater than that of the negative power source side circuit in the first stage, while the driving capacity of the negative power source side circuit is greater than that of the positive power source side circuit in the second stage, so that the output timing in the case of a signal rise lags behind that in the case of a signal fall. In this case, the same effect can be obtained by changing a relationship between the P-type and N-type MOS transistors in the examples of FIGS. 3 to 6.

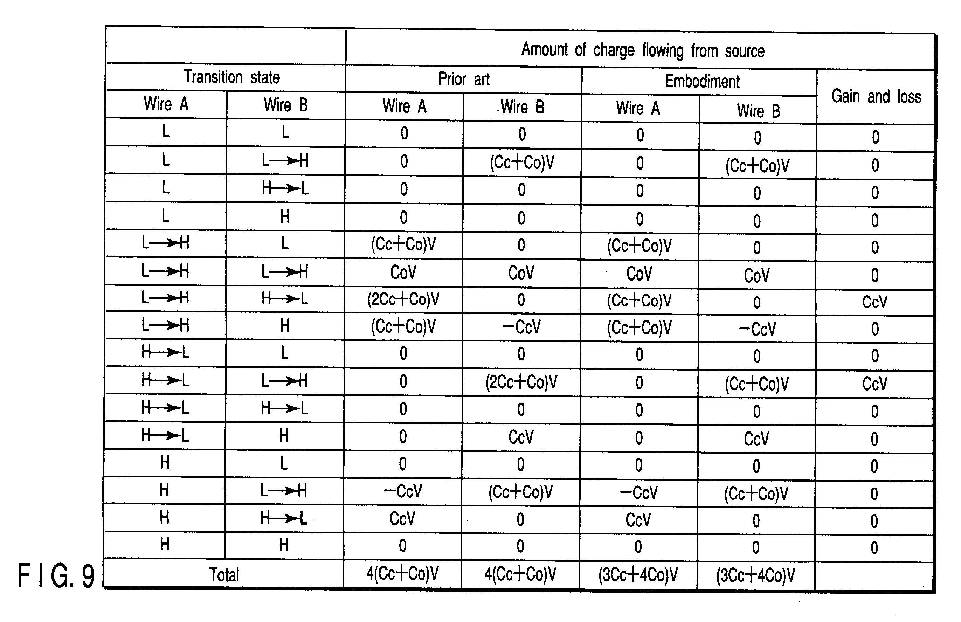

FIG. 9 quantitatively represents effects of reduction in power consumption achieved by this embodiment. It indicates the amounts of charge flowing from the power source to the driving circuits (bus drivers) for driving adjacent wires (wires A and B) in correspondence with the transition states of the wires. The capacitance between the wires is represented by C_{C}, the capacitance between the wire and the ground is represented by C₀, and the voltage amplitude is represented by V.

As is understandable from FIG. 9, in the two adjacent wires, when the potentials of the two wires transit in the opposite directions, i.e., the potential of one of them transits from the high level (H) to the low level (L) while that of the other transits from the low level (L) to the high level (H), the amount of charge flowing from the power source is reduced by C_{C}V as compared to the prior art. Therefore, according to this embodiment, the power can be reduced by (1/2)C_{C}V² at every two adjacent wires as compared to the prior art.

The ratio of the amount of inflow charge in this embodiment to that in the conventional method is (C_{C}+C₀)/(2C_{C}+C₀) in the transition in the opposite directions. Assuming that the transitions shown in FIG. 9 occur at the same probability, the ratio of the total amount of inflow charge in this embodiment to that in the conventional method is (3C_{C}+4C₀)/(4C_{C}+4C₀).

Under the current technology, the amount of C_{C} is ten times that of C₀. Therefore, the power can be saved about 50% in the case of the opposite direction transition, and about 23% on average.

Another example of each of the buffers constituting the driving circuits 12₁ to 12ₙ and 14₁ to 14ₙ shown in FIG. 1 will be described.

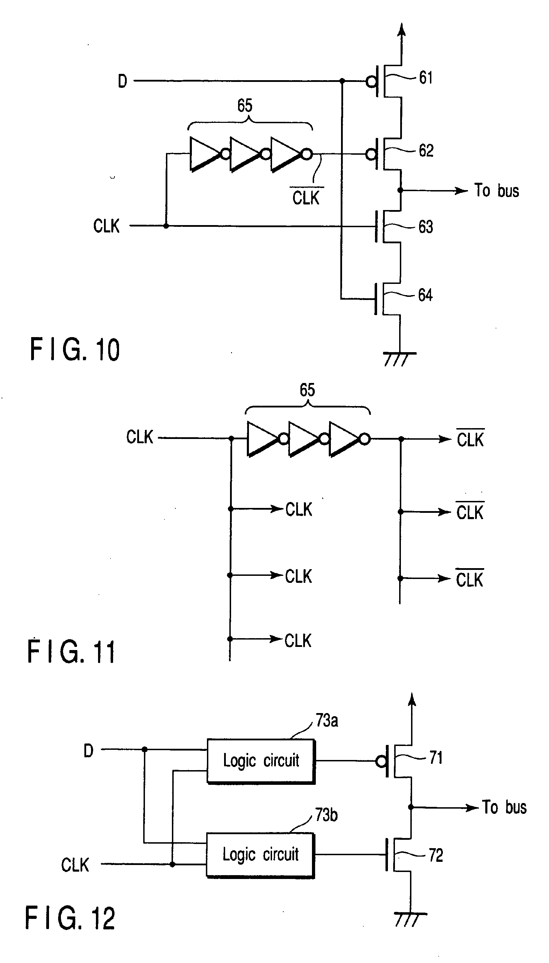

The buffer shown in FIG. 10 is a tri-state buffer having a complementary MIS (MOS) structure as a basic configuration. It is formed of a circuit connected to a positive power source (pull-up side) and a circuit connected to a negative power source (pull-down side, i.e., the ground). The buffer is configured to cause a time difference between output timings of the circuits in the positive and negative power source sides by differentiating the timings at which the circuits of the two sides are brought into an active state.

More specifically, P-type MOS transistors 61 and 62 constitute a positive power source side circuit, and N-type MOS transistors 63 and 64 constitute a negative power source side circuit. A data signal D is input to the P-type MOS transistor 61 and the N-type MOS transistor 64. A clock signal CLK is input to the N-type MOS transistor 63. An inverted clock signal /CLK, inverted from the clock signal CLK, is input to the P-type MOS transistor 62 via a delay circuit 65. The clock signal CLK is input (rises) after the data signal D is established. When the clock signal is input, the data signal is output to a wire constituting a bus.

In the above structure, the following operation is performed. When the input data signal D rises from the low level (L) to the high level (H), the negative power source side circuit formed of the N-type MOS transistors 63 and 64 is brought into conduction state (active state) in synchronism with the rise timing of the clock signal CLK. As a result, the output data signal falls from the high level (H) to the low level (L). On the other hand, when the input data signal D falls from the high level (H) to the low level (L), the positive power source side circuit formed of the P-type MOS transistors 61 and 62 is brought into conduction state (active state) in synchronism with the fall timing of the inverted clock signal /CLK. As a result, the output data signal rises from the low level (L) to the high level (H). The delay circuit 65 delays the fall timing of the inverted clock signal /CLK input to the P-type MOS transistor 62 by a predetermined period behind the rise timing of the clock signal CLK input to the N-type MOS transistor 63. For this reason, the output timing of a data signal in the case of the input data signal fall lags behind that in the case of the input data signal rise (by a time difference t_{d}).

In the example described above, the delay circuit 65 is connected to the input side of the P-type MOS transistor 62. Alternatively, the delay circuit 65 may be connected to the input side of the N-type MOS transistor 63, so that the inverted clock signal /CLK is input to the P-type MOS transistor 62 and the delayed clock signal CLK is input to the N-type MOS transistor 63. In this case, the output timing of a data signal in the case of the input data signal rise lags behind that in the case of the input data signal fall.

Further, in the above example, the delay circuit 65 is provided for every wire constituting a bus. However, the delay circuit 65 may be shared by a plurality of wires (buffers), as shown in FIG. 11.

Moreover, if the serial connection of the transistors as shown in FIG. 10 is to be avoided, the structure as shown in FIG. 12 may be employed. In this case, the same function as that of the circuit shown in FIG. 10 can be attained. In the example shown in FIG. 12, a logic circuit 73a having a predetermined logic function is connected to the input side of a P-type MOS transistor 71, while a logic circuit 73b having a predetermined logic function is connected to the input side of an N-type MOS transistor 72. The delay times (output timings) of the logic circuits 73a and 73b are different in the case where the data signal D rises and the case where it falls. The provision of the logic circuits 73a and 73b makes the input/output relationship of the overall circuit shown in FIG. 12 equivalent to that of the overall circuit shown in FIG. 10.

As described above, according to the present invention, the output timing of an output data signal varies depending on the direction of transition of the logic state of an input data signal. Therefore, the power consumption by the bus can be reduced easily and reliably.

## Claims

1. A circuit device **characterized by** comprising:
a bus including a plurality of wires (13₁ - 13ₙ); and
a plurality of driving circuits (12₁ - 12ₙ) which output input data to the wires in synchronism with a reference signal,
each of the driving circuits being configured to have a first delay time of an output signal from the reference signal when a logic value of an input signal transits from "0" to "1" and a second delay time of the output signal from the reference signal when the logic value of the input signal transits from "1" to "0", the first and second delay times being different from each other.

2. The circuit device according to claim 1, **characterized in that** each of the driving circuits (12₁ - 12ₙ) includes a first circuit portion and a second circuit portion, the first circuit portion being provided between the second circuit portion and a first power source having a first voltage, the second circuit portion being provided between the first circuit portion and a second power source having a second voltage lower than the first voltage, the first and second circuit portions having different driving capacities.

3. The circuit device according to claim 1, **characterized in that** each of the driving circuits (12₁ - 12ₙ) includes a first circuit portion, a second circuit portion and a control portion, the first circuit portion being provided between the second circuit portion and a first power source having a first voltage, the second circuit portion being provided between the first circuit portion and a second power source having a second voltage lower than the first voltage, the control portion differentiating a time period from transition of a logic value of the reference signal to activation of the first circuit portion and a time period from transition of the logic value of the reference signal to activation of the second circuit portion.

4. A circuit device according to any one of claims 1 to 3, **characterized in that** a time difference between the first delay time and the second delay time is longer than a transition time of a logic value of the output signal.
